# EUROPEAN PATENT APPLICATION

(11) **EP 1 153 934 A1**
(43) Date of publication of application: **14.11.2001**
(21) Application number: 00430019.0
(22) Date of filing: 09.05.2000
(51) Int. Cl.: C08F 2/42, C08F 2/34

(54) **Method for deactivating a polymerisation reaction**

(71) Applicant: BP Chemicals S.N.C., Cergy St. Christophe, 95866 Cergy Pontoise Cedex (FR)
(72) Inventor: Krause, Franck, 41542 Dormagen (DE); Welter, Michael, 41542 Dormagen (DE); Sommerfeld, Holger, 41542 Dormagen (DE); Niederberger, Hans-Ludwig, 41569 Rommerskirchen (DE); Muller, Michael, 50769 Köln (DE)
(74) Representative: De Kezel, Eric

(57) **Abstract**

The present invention relates to a method for deactivating a gas phase polymerisation reaction in the presence of an organometallic catalyst, which is characterised in that the organometallic catalyst present in the reaction system is deactivated by the addition of steam at a pressure above the reaction pressure of the polymerisation reaction. Preferably, the method according to the present invention applies for rapidly interrupting a polymerisation reaction in the gas phase.

## Description

The present invention relates to a method for deactivating a polymerisation reaction in the gas phase.
The present invention also relates to a method for rapidly interrupting a polymerisation reaction in the gas phase.

Gas phase polymer reactions of this kind proceed in the presence of very fine particles of an organometallic catalyst or a mixture of a number of these. The polymer grain forms around the particles of catalyst, so that the catalyst is removed from the reactor with the polymer grain that is withdrawn. It therefore has to be continuously supplied again in measured doses. Polymerisation reactions of this type are subject to occasional disturbances that make it appears desirable to interrupt the reaction immediately. An example of a disturbance of this kind would be the agglomeration of polymer grains to form larger units (big pellets) that can no longer be held in the fluidised bed and therefore sink and block the supply leads for catalyst and polymer(s). Another disturbance may be a rise or fall in the set reaction temperature, leading to disturbances in the molecular weight and/or in the distribution of the molecular weight aimed for, thus producing goods that do not satisfy the specifications. Another disturbance again could be the interruption of the metering of catalyst and monomer(s), once again resulting in goods that do not satisfy the specifications. It can also be desirable not to delay the start of a planned repair shutdown or a regularly occurring safety test because of a long-drawn out "rundown" of the reaction. The specialist who operates such reactions is familiar with other situations that make it desirable to stop the polymer reaction without delay.

To date there have been attempts to deactivate the particles of catalyst by introducing carbon dioxide or carbon monoxide into the polymerisation reactor and thus interrupt the polymerisation reaction. Deactivation in this way is also satisfactory with CO₂ , but the disadvantage of using CO₂ is that it adheres tenaciously and adsorptively to the inner wall of the polymerisation reactor with the result that when the polymerisation reaction is re-started by the addition of fresh catalyst, the CO₂ that is still present leads to disturbances which persist until all of the CO₂ that is still adsorptively attached to the wall is "used up". Catalyst particles can also be satisfactorily deactivated with CO without incurring the disadvantage of CO₂, namely adsorptive adhesion to the reactor wall. However, unlike CO₂, CO has the two detrimental properties of toxicity and combustibility.

As part of the study of the present invention, an attempt was made to use water as a deactivating agent for the catalyst. The basic suitability of H₂O as a deactivator was known, but the results obtained by this method were considered as non satisfactory.

The Applicants have now unexpectedly found a new method for deactivating a polymerisation reaction running in the gas phase which solves the above identified problems.

Accordingly, the present invention relates to a method for deactivating a gas phase polymerisation reaction in the presence of an organometallic catalyst, which is characterised in that the organometallic catalyst present in the reaction system is deactivated by the addition of steam at a pressure above the reaction pressure of the polymerisation reaction. Preferably, the method according to the present invention applies for rapidly interrupting a polymerisation reaction in the gas phase.

While not wishing to be bound by this theory, the Applicants believe that invention methods improves the distribution of the sprayed water throughout the volume of the polymerisation reactor which renders its corresponding effect on the polymerisation reaction quicker and more efficient. The advantages associated with the present invention method are that it allows to use an amount of water less that the usual amounts of water used in prior art methods together with an improved associated result.

Preferably steam at a pressure of at least 3 bar, more preferably at least 5 bar above the pressure prevailing in the polymerisation reactor, is used for the method according to the present invention. Said steam pressure is also preferably lower than 15 bar, more preferably lower than 10 bar above the pressure prevailing in the polymerisation reactor. For example, absolute pressure of steam of the order of 4 to 50 bar, preferably 5 to 30 bar can be used. Polymerisation reactions which proceed at normal pressure up to a pressure of 47 bar can thus be rapidly interrupted according to the present invention.

The amount of high pressure steam can vary from very low amounts, e.g. from amounts of the ppm magnitude (e.g. around 0.05 , 0.1 , 0.5, 1, 1.5, 2, 2.5, 3 , 4, or around 5 ppm by weight vs the fresh monomer feed, e.g. ethylene), like described in EP-359444 when the objective is to act against local hot spots and agglomeration phenomena, up to very high amounts when the objective is to rapidly interrupt the polymerisation reaction. In the case of a rapid interruption, one used preferably at least 100% of the corresponding stoeichiometric amount necessary for deactivation of the catalyst present in the polymerisation reaction at the time of the interruption. Greater amounts can also be used, for example up to 1000% of the amount needed stoeichiometrically for deactivation; in a preferred way 200 to 400% of the amount needed stoeichiometrically for deactivation is used.

In the case of a rapid interruption of the polymerisation reaction and according to a preferred embodiment, the addition of the organometallic catalysts is shut off before or at the same time as the pressurised steam is added to the reaction system.

In the case of a rapid interruption of the polymerisation reaction and according to a preferred embodiment, after deactivation of the catalyst all the participants in the polymerisation reaction, that is to say, the deactivated catalyst, the monomer(s) and any substances also present that are inert as far as polymerisation is concerned, are blown out. The polymerisation reactor is then accessible for the elimination of a fault or for repair or inspection purposes. After the fault has been dealt with or the necessary work has been completed the polymerisation reaction is started up in the usual way. The short stop for the purposes given is thus ended effectively and just as rapidly because the newly added organometallic catalyst very rapidly consumes all traces of water and it is thus possible to return to normal operating conditions in a very short time.

The process according to the present invention is particularly suitable for the manufacture of polymers in a continuous gas fluidised bed process. Illustrative of the polymers which can be produced in accordance with the invention are the following:
SBR (polymer of butadiene copolymerised with styrene),
ABS (polymer of acrylonitrile, butadiene and styrene),
nitrile (polymer of butadiene copolymerised with acrylonitrile),
butyl (polymer of isobutylene copolymerised with isoprene),
EPR (polymer of ethylene with propylene),
EPDM (polymer of etylene copolymerised with propylene and a diene such as hexadiene, dicyclopentadiene or ethylidene norborene),
copolymer of ethylene and vinyltrimethoxy silane, copolymer of ethylene and one or more of acrylonitrile, maleic acid esters, vinyl acetate, acrylic and methacrylic acid esters and the like

In an advantageous embodiment of this invention, the polymer is a polyolefin preferably copolymers of ethylene and/or propylene and/or butene. Preferred alpha-olefins used in combination with ethylene and/or propylene and/or butene in the process of the present invention are those having from 4 to 8 carbon atoms. However, small quantities of alpha olefms having more than 8 carbon atoms, for example 9 to 40 carbon atoms (e.g. a conjugated diene), can be employed if desired. Thus it is possible to produce copolymers of ethylene and/or propylene and/or butene with one or more C4-C8 alpha-olefins. The preferred alpha-olefins are but-1-ene, pent-1-ene, hex-1-ene, 4-methylpent-1-ene, oct-1-ene and butadiene. Examples of higher olefins that can be copolymerised with the primary ethylene and/or propylene monomer, or as partial replacement for the C4-C8 monomer are dec-1-ene and ethylidene norbornene. According to a preferred embodiment, the process of the present invention preferably applies to the manufacture of polyolefins in the gas phase by the copolymerisation of ethylene with but-1-ene and/or hex-1-ene and/or 4MP-1.

The process according to the present invention may be used to prepare a wide variety of polymer products for example linear low density polyethylene (LLDPE) based on copolymers of ethylene with but-1-ene, 4-methylpent-1-ene or hex-1-ene and high density polyethylene (HDPE) which can be for example copolymers of ethylene with a small portion of higher alpha olefin, for example, but-1-ene, pent-1-ene, hex-1-ene or 4-methylpent-1-ene.

The process is particularly suitable for polymerising olefins at an absolute pressure of between 0.5 and 6 MPa and at a temperature of between 30°C and 130°C. For example for LLDPE production the temperature is suitably in the range 75-95°C and for HDPE the temperature is typically 80-110°C depending on the activity of the catalyst used and the polymer properties desired.

The polymerisation is preferably carried out continuously in a vertical fluidised bed reactor according to techniques known in themselves and in equipment such as that described in European patent application EP-0 855 411, French Patent No. 2,207,145 or French Patent No. 2,335,526. The process of the invention is particularly well suited to industrial-scale reactors of very large size.

Thus, according to the present invention, the organometallic catalyst present in the reaction system is deactivated by the addition of steam at a pressure above the reaction pressure of the polymerisation reaction. Consequently, said organometallic catalyst should at least be partially deactivated in the presence of water. Said organometallic catalyst preferably consists of a catalyst system which comprises a catalyst component comprising at least one metal compound selected from groups 4 to 6 or groups 8 to 10 of the Periodic table of the elements (New notation). Preferably, said catalyst system further comprises a cocatalyst compound which comprises at least one compound selected from groups 12 to 13 of the Periodic table of the elements (New notation).
For example, the polymerisation reaction may be carried out in the presence of a catalyst system of the Ziegler-Natta type, consisting of a solid catalyst essentially comprising a compound of a transition metal and of a cocatalyst comprising an organic compound of a metal (i.e. an organometallic compound, for example an alkylaluminium compound). High-activity catalyst systems have already been known for a number of years and are capable of producing large quantities of polymer in a relatively short time, and thus make it possible to avoid a step of removing catalyst residues from the polymer. These high-activity catalyst systems generally comprise a solid catalyst consisting essentially of atoms of transition metal, of magnesium and of halogen. The process is also suitable for use with Ziegler catalysts supported on silica. The process is also especially suitable for use with metallocene catalysts in view of the particular affinity and reactivity experienced with comonomers and hydrogen. The process can also be advantageously applied with the iron and/or cobalt complexes catalysts, e.g. such as those disclosed in WO98/27124 or in WO99/12981.

The catalyst may suitably be employed in the form of a prepolymer powder prepared beforehand during a prepolymerisation stage with the aid of a catalyst as described above. The prepolymerisation may be carried out by any suitable process, for example, polymerisation in a liquid hydrocarbon diluent or in the gas phase using a batch process, a semi-continuous process or a continuous process.

## Claims

1. Method for deactivating a gas phase polymerisation reaction in the presence of an organometallic catalyst, which is **characterised in that** the organometallic catalyst present in the reaction system is deactivated by the addition of steam at a pressure above the reaction pressure of the polymerisation reaction.

2. Method for rapidly interrupting a gas phase polymerisation reaction in the presence of an organometallic catalyst, which is **characterised in that** the organometallic catalyst present in the reaction system is deactivated by the addition of steam at a pressure above the reaction pressure of the polymerisation reaction.

3. Method according to either of claims 1 and 2, **characterised in that** the steam is introduced at a pressure of at least 3 bar, preferably at least 5 bar above the pressure prevailing in the polymerisation reactor.

4. Method according to any of the preceding claims wherein the steam is introduced at a pressure lower than 15 bar, preferably lower than 10 bar above the pressure prevailing in the polymerisation reactor.

5. Method according to claim 2, **characterised in that** the amount of steam to be added is 100 to 1,000%, preferably 200 to 400%, of the amount stoeichiometrically necessary to deactivate the catalyst.

6. Method according to claim 2 wherein the addition of the organometallic catalyst is shut off before or at the same time as the pressurised steam is added to the reaction system, preferably at the same time.
